# EUROPEAN PATENT APPLICATION

(11) **EP 1 548 236 A2**
(43) Date of publication of application: **29.06.2005**
(21) Application number: 04030741.5
(22) Date of filing: 23.12.2004
(51) Int. Cl.: F01D 13/00, F01D 17/04, F01D 17/06

(54) **Two-shaft gas turbine control method, two-shaft gas turbine, and two-shaft gas turbine control system**

(30) Priority: 26.12.2003 JP 2003431805
(71) Applicant: Hitachi, Ltd., Tokyo 100-8280 (JP)
(72) Inventor: Kishibe, Tadaharu, Tokyo 100-8220 (JP); Takahashi, Yasuo, Tokyo 100-8220 (JP)
(74) Representative: Beetz & Partner Patentanwälte

(57) **Abstract**

A method of controlling an operation of a 2-shaft gas turbine comprises, when an operation of a 2-shaft gas turbine is changed to reduce a load from a predetermined load, a first step of reducing a rotating speed of a compressor (1) and a second step of reducing a working airflow in the compressor (1). With the method, a reduction in compressor (1) efficiency during partial load operation of the gas turbine can be suppressed, and a surge margin of the compressor can be ensured.

## Description

### BACKGROUND OF THE INVENTION

### 1. Field of the Invention

The present invention relates to a method of controlling an operation of a 2-shaft gas turbine, the 2-shaft gas turbine, and a system for controlling the operation of the 2-shaft gas turbine.

### 2. Description of the Related Art

According to a technique disclosed in Patent Reference 1; JP,B 7-6417, rotating speed is made variable in a 2-shaft gas turbine, and when supplying a hot gas leaving a high pressure turbine to a power turbine, the hot gas is supplied through a variable guide vane disposed at an inlet of the power turbine, to thereby control an output power of the power turbine.

### SUMMARY OF THE INVENTION

In the technique disclosed in Patent Reference 1, however, the variable guide vane disposed at the inlet of the power turbine is intended to adjust a hot gas flow supplied to the power turbine, thereby just changing the output power of the power turbine. It is therefore difficult to control a working airflow streaming through a compressor. In other words, compressor characteristics are not changed, and hence the disclosed technique is not adaptable for a reduction in compressor efficiency during partial load operation.

It is an object of the present invention to, in a 2-shaft gas turbine, suppress a reduction in compressor efficiency during partial load operation of the gas turbine, and ensure a surge margin of a compressor.

The present invention is characterized by, when an operation of the 2-shaft gas turbine is changed to reduce a load from a predetermined load, a first step of reducing a rotating speed of a compressor and a second step of reducing a working airflow in the compressor.

According to the present invention, in the 2-shaft gas turbine, it is possible to suppress a reduction in compressor efficiency during partial load operation of the gas turbine, and to ensure a surge margin of a compressor.

### BRIEF DESCRIPTION OF THE DRAWINGS

Fig. 1 is a chart showing schedules of a compressor rotating speed and an opening degree of a variable stator vane;
Fig. 2 is a chart showing the relationship between a gas turbine power and compressor efficiency or surge margin;
Fig. 3 is a chart showing schedules of the compressor rotating speed and the opening degree of the variable stator vane when the compressor rotating speed and the opening degree of the variable stator vane are reduced at the same time;
Fig. 4 is a chart showing the relationship between the gas turbine power and the compressor efficiency or surge margin when the compressor rotating speed and the opening degree of the variable stator vane are reduced at the same time;
Fig. 5 is a chart showing schedules of the compressor rotating speed and the opening degree of the variable stator vane;
Fig. 6 is a chart showing the relationship between the gas turbine power and the compressor efficiency or surge margin;
Fig. 7 is a chart showing schedules of the compressor rotating speed and the opening degree of the variable stator vane.
Fig. 8 is a chart showing the relationship between the gas turbine power and the compressor efficiency or surge margin;
Fig. 9 is a block diagram of a 2-shaft gas turbine;
Fig. 10 is a chart showing the relationship between the compressor efficiency and surge margin when the compressor rotating speed is controlled;
Fig. 11 is a chart showing the relationship between the compressor efficiency and surge margin when the variable stator vane of the compressor is controlled; and
Fig. 12 shows a control flow in a control system.

### DESCRIPTION OF THE PREFERRED EMBODIMENTS

In a 2-shaft gas turbine, a rotary shaft of a gas generator and a power turbine is separated into two shafts. As compared with a 1-shaft gas turbine, therefore, the 2-shaft gas turbine has a higher degree of freedom in operation and can improve partial load performance. In the 1-shaft gas turbine, the gas turbine power can be controlled just by adjusting a fuel flow supplied to a combustor. In the 2-shaft gas turbine, however, it is hard to control the gas turbine power just by adjusting the fuel flow supplied to the combustor. Thus, a suction flow of a compressor disposed in a gas generator must be also controlled in the 2-shaft gas turbine. For controlling the compressor suction flow, there are two methods. One general method is to variably control a rotating speed of the compressor, and the other method is to variably control a mount angle of a variable stator vane mounted to the compressor. By variably controlling the mount angle of the variable stator vane mounted to the compressor, the working airflow in the compressor can be directly reduced.

In the case not considering a mechanical loss, etc. for simplicity, to operate the gas generator at a constant rotating speed in the 2-shaft gas turbine, motive power generated by a high pressure turbine in the gas generator and driving power of the compressor in the gas generator must be properly adjusted. This point will be described in more detail below. The 1-shaft gas turbine includes the compressor, the combustor, and the turbine. The compressor and the turbine are coupled to each other by one rotary shaft for rotating a load, such as a generator. In the 1-shaft gas turbine, therefore, the remainder resulting from subtracting the driving power of the compressor from the motive power generated by the high pressure turbine is taken out as output power of the generator, etc.

On the other hand, in the 2-shaft gas turbine, the rotary shafts of the gas generator and the power turbine are separated from each other unlike the 1-shaft gas turbine. Looking at the gas generator, therefore, the respective motive powers of the high pressure turbine and the compressor must be properly adjusted. Even in trying to change the load depending on only the fuel flow without changing the rotating speed of the gas generator and/or the angle of the variable stator vane of the compressor (i.e., without varying the suction flow), the load cannot be changed to a large extent because the fuel flow is not so throttled. Accordingly, varying the suction flow of the compressor is one possible manner to change the load to a large extent. In an embodiment described here, a gas turbine load at which the gas turbine can be operated with maximum efficiency is called a full load or rated load (rated state). Also, a state in which the gas turbine is operated under a load lower than the full load is called a partial load state.

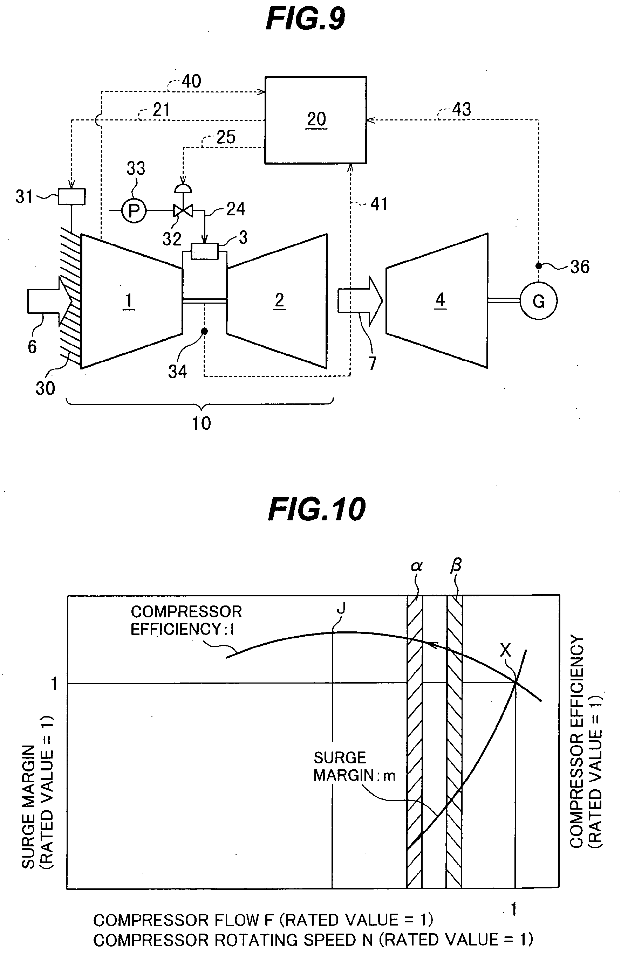

Fig. 10 is a chart showing the relationship between efficiency and a surge margin of a compressor when an airflow in the compressor is reduced depending on only the compressor rotating speed. In Fig. 10, the vertical axis on the left side represents the surge margin of the compressor, the vertical axis on the right side represents the compressor efficiency, and the horizontal axis represents a compressor flow F. Note that the vertical axis on the left side representing the surge margin and the vertical axis on the right side representing the compressor efficiency differ in scale from each other. Since the compressor flow F is reduced by throttling a compressor rotating speed N, the horizontal axis also represents the compressor rotating speed N. For example, by changing the compressor rotating speed to reduce the working airflow in the compressor, the compressor flow F is reduced from the rated state. At this time, the compressor efficiency shifts from a point X leftward along a curve 1 and hence increases to a point J. When the compressor flow F is reduced from the rated state in such a way, the surge margin shifts from the point X leftward along a curve m. In other words, when the compressor flow is reduced by changing only the compressor rotating speed, the surge margin of the compressor reduces. The term "surge margin" is now described. A compressor is a machine for boosting pressure of a sucked fluid, and a ratio between pressures before and after the pressure boosting by the compressor is called a pressure ratio. The term "surge margin" means a margin between a pressure ratio at which surging occurs and a pressure ratio at an actual operating point. Also, the term "surging" means a phenomenon that, when the pressure ratio is gradually increased, there occur an abrupt pressure fluctuation accompanying with strong noises, a vigorous airflow pulsation, and mechanical vibrations at a certain ratio, whereby the compressor operation is brought into an unstable state. In some types of compressors, because a sufficient surge margin cannot be ensured, the compressor rotating speed cannot be so reduced and the gas turbine power cannot be often satisfactorily reduced. In the case of Fig. 10, a predetermined region where the surge margin is too reduced and the surging occurs is assumed to be α.

Next, a variable range of the compressor rotating speed will be described. The variable range of the compressor rotating speed is decided depending on a rotating speed at which a compressor blade resonates. For that reason, when the compressor rotating speed is reduced from the rated state, it cannot be reduced beyond the rotating speed at which the compressor blade resonates. In the case of Fig. 10, a predetermined region where the compressor rotating speed reaches the resonance rotating speed is assumed to be β. Accordingly, the variable range of the compressor rotating speed spans from the rated state to the rotating speed at which the compressor blade resonates. If a structure for reducing the resonance rotating speed of the compressor blade is employed to enlarge the variable range, such a structure requires a blade thickness to be increased, and optimum design cannot be obtained from the aerodynamic point of view. For that reason, there is a limit in enlarging the variable range of the compressor rotating speed.

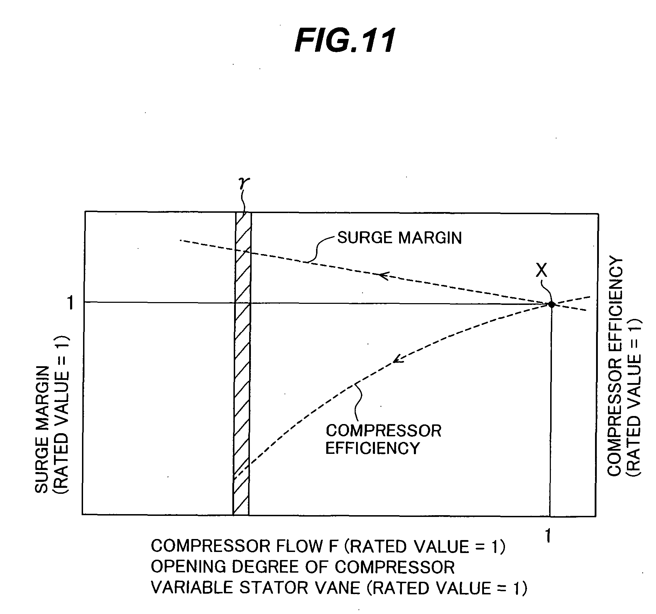

Fig. 11 is a chart showing the relationship between the compressor efficiency and surge margin when the compressor flow is reduced by changing only the variable stator vane of the compressor. In Fig. 11, the vertical axis on the left side represents the surge margin, the vertical axis on the right side represents the compressor efficiency, and the horizontal axis represents the compressor flow F. Since the compressor flow F is reduced by reducing an opening degree V of the variable stator vane, the horizontal axis also represents the opening degree V of the variable stator vane. As shown in Fig. 11, the compressor efficiency reduces as the opening degree V of the variable stator vane of the compressor is reduced. From the viewpoint of the compressor efficiency, therefore, the partial load performance becomes lower than the case in which the gas turbine power is controlled depending on the compressor rotating speed. In the case of reducing the compressor flow just by controlling only the mount angle of the variable stator vane, the surge margin is increased from the rated state. Consequently, a possibility of surging decreases.

### (First Embodiment)

Fig. 9 is a block diagram of a 2-shaft gas turbine according to a first embodiment. The 2-shaft gas turbine of this embodiment comprises a gas generator 10 and a power turbine 4. The gas generator 10 comprises a compressor 1 for compressing atmospheric air 6 to produce compressed air, a combustor 3 for mixing the compressed air produced by the compressor 1 with fuel and burning the air-fuel mixture, and a high pressure turbine 2 rotated by a hot gas leaving the combustor 3. The compressor 1 and the power turbine 4 have the same rotary shaft. A low pressure turbine serving as the power turbine 4 is rotated with energy of an exhaust gas 7 leaving the high pressure turbine 2, thereby rotating, e.g., a generator 5 or a process compressor that is coupled to the rotary shaft of the power turbine 4. The gas generator 10 and the power turbine 4 are of 2-shaft type having respective shafts separated from each other. Further, the compressor 1 is constructed such that an inlet guide vane has a variable mount angle and, as required, a stator vane on the forward side also has a variable mount angle. Herein, the stator vane mounted to the compressor and having the variable mount angle, including the inlet guide vane, is called a stator vane 30. Additionally, the variable stator vane 30 has an opening degree adjusted by a variable stator vane actuator 31.

The gas generator 10 is provided with a tachometer 34. A shaft rotating speed of the gas generator 10 can be measured by of the tachometer 34. The shaft rotating speed of the gas generator 10 is controlled primarily depending on a flow rate of fuel 24 supplied to the combustor 3.

A fuel system for supplying the fuel 24 to the combustor 3 will be described below. A fuel supply pump 33 is disposed on the upstream side of the fuel system, and the flow rate of the fuel (i.e., fuel flow) supplied from the fuel supply pump 33 is controlled by a fuel control valve 32. Further, a bleed chamber is provided in a casing of the compressor 1, and a bleed line for startup and a bleed line for cooling high pressure components of the turbine are mounted in the bleed chamber. A part of the working fluid in the bleed chamber is bled as required.

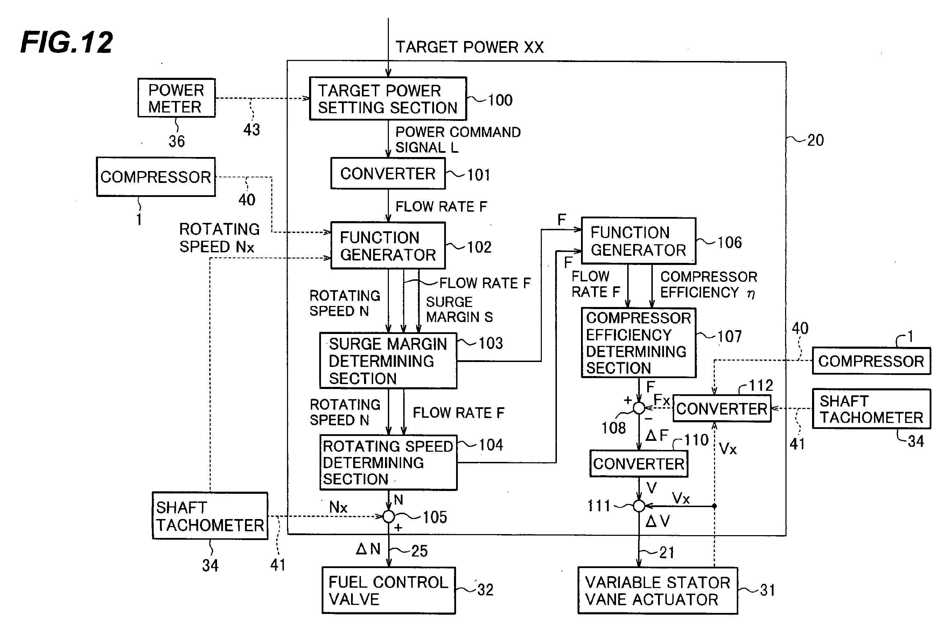

A control system 20 will be described below with reference to Figs. 9 and 12. The control system 20 mainly receives a pressure ratio 40 in the compressor 1, a gas-generator shaft rotating speed 41 obtained from the shaft tachometer 34 provided on the gas generator 10, and a gas turbine power 43 obtained from a power meter 36 mounted to the generator. Based on those input data, the control system 20 outputs a signal 21 for controlling the opening degree of the variable stator vane, and a signal 25 for controlling the fuel flow. Note that, in Fig. 9, the signals transmitted from and received by the control system 20 are represented by dotted lines. Fig. 12 shows a basic control flow in the control system 20. A target output setting section 100 receives a gas turbine target output power XX and the gas turbine power 43 obtained from the power meter 36, and transmits a corresponding output command signal L. A converter 101 computes a working airflow F in the compressor, which corresponds to the target output power XX, based on the output command signal L and then outputs the computed working airflow F to a function generator 102. The function generator 102 computes a surge margin value S and a target compressor rotating speed N, and the specific process of the calculation is as follows: Firstly, the surge margin value S is computed by "surging pressure ratio" /"current pressure ratio". Here, the "surging pressure ratio" means the pressure ratio at which the surging starts, and the value can be necessarily determined if the compressor rotating speed Nx is known. The "current pressure ratio" can be obtained by the signal 40 from the compressor 1. Thus, the function generator 102 computes the surge margin S by receiving the compressor rotating speed Nx from the shaft tachometer 34 and the pressure ratio 40 from the compressor 1. Next, the function generator 102 computes the target compressor rotating speed N based on the airflow F (the working air flow F in the compressor 1 corresponding the target output power XX) received from the converter 101. The function generator 102 transmits the computed surge margin value S, the compressor rotating speed N, and the working airflow F to a surge margin determining section 103. The surge margin determining section 103 judges or determines whether the surge margin value S transmitted from the function generator 102 is within a safety range. If the surge margin value S is within the safety range, the compressor rotating speed N and the working airflow F are transmitted to a rotating speed determining section 104. Conversely, if it is determined that the surge margin value S is problematic, the working airflow F is transmitted to a function generator 106. The rotating speed determining section 104 judges or determines whether the compressor rotating speed N transmitted from the surge margin determining section 103 reaches the resonance rotating speed. If the compressor rotating speed is within a safety range (i.e., if neither the surge margin value S nor the compressor rotating speed N are problematic), the compressor rotating speed N is transmitted to a subtracter 105. If it is determined in the rotating speed determining section 104 that the compressor rotating speed N is problematic, the working airflow F at this time is transmitted to the function generator 106. Based on the compressor rotating speed N transmitted from the rotating speed determining section 104, the subtracter 105 computes a rotating speed control variable ΔN in comparison with the compressor rotating speed Nx obtained from the shaft tachometer 34, thereby controlling the fuel control valve 32. Practically, a signal 25 for reducing the opening degree of the fuel control valve 32 is transmitted to the fuel control valve 32.

Thus, the surge margin determining section 103 has the function of preventing the surge margin from becoming too small when the compressor flow is reduced by reducing the compressor rotating speed. Also, the rotating speed determining section 104 has the function of preventing the compressor rotating speed from reaching the resonance rotating speed.

Further, the working airflow F in the compressor from the surge margin determining section 103 or the rotating speed determining section 104 is transmitted to the function generator 106. The correspondent relationship shown in Fig. 11 is set in the function generator 106. It is therefore possible to compute the surge margin and the compressor efficiency resulting when the working airflow F in the compressor is reduced by using only the variable stator vane 30. The function generator 106 computes compressor efficiency η, and then transmits the compressor efficiency η and the working airflow F to a compressor efficiency determining section 107. Upon receiving the working airflow F and the compressor efficiency η from the function generator 106, the compressor efficiency determining section 107 judges or determines whether the compressor efficiency η is not too low (i.e., whether the compressor efficiency η does not reach a region γ in Fig. 11). In the case of Fig. 11, a predetermined lower limit region where the compressor efficiency η can be reduced is assumed to be γ. If the compressor efficiency η is not problematic, the working airflow F in the compressor is transmitted to a subtracter 108. Based on the inputted working airflow F in the compressor, the subtracter 108 transmits a control variable ΔF for the working airflow F. A converter 110 has the function of converting the working airflow in the compressor into the opening degree of the variable stator vane. Also, a converter 112 computes a working airflow Fx based on the compressor rotating speed obtained from the shaft tachometer 34, the pressure ratio 40 obtained from the compressor 1, the opening degree Vx of the variable stator vane 30, etc. Therefore, the subtracter 108 can compute the control variable ΔF for the working airflow F based on the working airflow F obtained from the compressor efficiency determining section 107 and the working airflow Fx obtained from the converter 112. Further, a subtracter 111 computes a control variable ΔV for the opening degree of the variable stator vane based on the opening degree V of the variable stator vane obtained from the converter 110 and the opening degree Vx of the variable stator vane obtained from the variable stator vane actuator 31. Thus, the subtracter 111 transmits the control variable ΔV, as a signal 21, to the variable stator vane actuator 31, thereby reducing the opening degree of the variable stator vane. If it is determined in the compressor efficiency determining section 107 that the compressor efficiency η is too low, the variable stator vane actuator 31 is controlled so as to increase the opening degree of the variable stator vane. Also, because the surge margin increases with a reduction in the opening degree of the variable stator vane 30, the control flow may be returned to the function generator 102 again to reduce the compressor rotating speed.

When the gas turbine power obtained from the power meter 36 mounted to the generator has reached the target power XX set by the target power setting section 100, the control is stopped at that time.

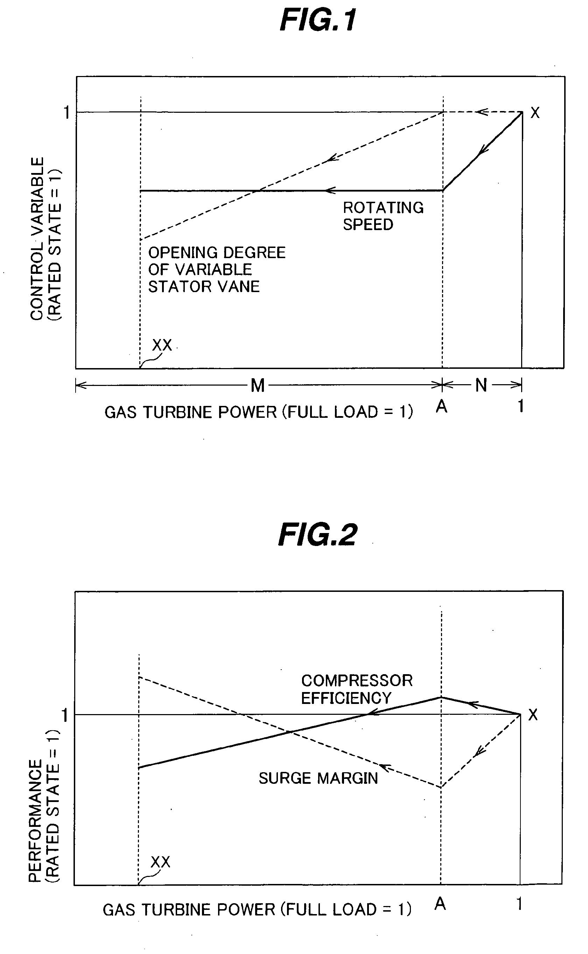

With reference to Figs. 1, 2 and 12, a description is now made of procedures for controlling the compressor rotating speed and the opening degree of the variable stator vane when the gas turbine power is reduced for a shift from the full or rated power (full or rated load state) to the partial load state. The vertical axis represents the compressor rotating speed and the opening degree of the variable stator vane in terms of control variables with respect to the rated state (= 1). The horizontal axis represents the gas turbine power when the compressor rotating speed and the opening degree of the variable stator vane are controlled from the state of full load (= 1). Also, the vertical axis in Fig. 2 represents performance when the compressor efficiency and the surge margin are modified from the rated state (= 1) of the gas turbine. The rated state of the gas turbine is positioned in a point X, and the point X has a value of 1 in the horizontal axis. Then, when the gas turbine power is reduced by controlling one of the compressor rotating speed and the variable stator vane of the compressor, an operating point transits from the point X leftward on the graph.

Herein, when the compressor rotating speed is reduced from the rated state, there may occur two cases, i.e., one in which the surge margin becomes too low before reaching the resonance rotating speed (i.e., the case in which the rotating speed in the region α in Fig. 10 is closer to the rated state than the rotating speed in the region β), and the other in which the compressor rotating speed reaches the resonance rotating speed even with the surge margin being sufficient (i.e., the case in which the rotating speed in the region β in Fig. 10 is closer to the rated state than the rotating speed in the region α). This embodiment will be described below in connection with the case in which the compressor rotating speed reaches the resonance rotating speed even with the surge margin being sufficient.

When the operation of the gas turbine is shifted from the full or rated power (full or rated load) state to the partial load state, the target output setting section 100 receives the gas turbine target output power XX and the gas turbine power 43 obtained from the power meter 36. Then, the target output setting section 100 sets the gas turbine target output power XX and transmits the output command signal L to the converter 101. The converter 101 computes the working airflow F in the compressor based on the output command signal L and then outputs the computed working airflow F to the function generator 102. As shown in Fig. 12, the pressure ratio 40 of the compressor 1, the working airflow F in the compressor and the compressor rotating speed Nx obtained from the shaft tachometer 34 are transmitted to the function generator 102, which computes the surge margin value S and the target compressor rotating speed N. The function generator 102 transmits the computed target compressor rotating speed N and surge margin value S, and the working airflow F to the surge margin determining section 103. In this embodiment, since the surge margin value S transmitted from the function generator 102 is not problematic, the compressor rotating speed N and the working airflow F at this time are transmitted to the rotating speed determining section 104. The rotating speed determining section 104 detects whether the transmitted compressor rotating speed N reaches the rotating speed region β where resonance occurs, or does not yet reach it (i.e., the gas turbine power A in Fig. 1). After the detection, it is desirable that the compressor rotating speed N be set to a predetermined range. This is because, at the resonance rotating speed of the compressor blade, a difficulty arises in performing the operation while maintaining the compressor rotating speed. Then, the rotating speed determining section 104 transmits the working airflow F in the compressor to the function generator 106. If neither the surge margin nor the compressor rotating speed are problematic (i.e., within a zone N in Fig. 1), the rotating speed determining section 104 transmits the compressor rotating speed N to the subtracter 105. Based on both the transmitted compressor rotating speed N and the compressor rotating speed Nx obtained from the shaft tachometer 34, the subtracter 105 transmits the rotating speed control variable ΔN to the fuel control valve 32.

Further, the working airflow F in the compressor is transmitted to the function generator 106 from the rotating speed determining section 104. The function generator 106 computes the surge margin S and the compressor efficiency η required when the compressor is reduced by using the variable stator vane 30, and then transmits the compressor efficiency η and the working airflow F to the compressor efficiency determining section 107. The compressor efficiency determining section 107 determines whether the compressor efficiency η transmitted from the function generator 106 is problematic or not. Practically, it is determined whether the compressor efficiency η reaches the region γ or not. If the compressor efficiency determining section 107 determines that the compressor efficiency η is not problematic, the working airflow F in the compressor is transmitted to the subtracter 108. Also, the converter 112 computes the working airflow Fx based on the pressure ratio obtained from the compressor 1, the compressor rotating speed obtained from the shaft tachometer 34, the opening degree Vx of the variable stator vane obtained from the variable stator vane actuator 31, etc. The subtracter 108 outputs the control variable ΔF for the working airflow F based on the working airflow Fx obtained from the converter 112 and the working airflow F obtained from the compressor efficiency determining section 107. Then, the converter 110 converts ΔF into the opening degree of the variable stator vane 30 and transmits the converted opening degree to the subtracter 111. The subtracter 111 outputs the control variable ΔV for the opening degree of the variable stator vane 30 based on the transmitted opening degree V of the variable stator vane obtained from the converter 110 and the opening degree Vx of the variable stator vane obtained from the variable stator vane actuator 31. Practically, the subtracter 111 transmits the signal 21 to the variable stator vane actuator 31, thereby closing the variable stator vane 30 (i.e., reducing the opening degree of the variable stator vane). Thus, by controlling the compressor rotating speed and the opening degree of the variable stator vane of the compressor, the amount of the atmospheric air 6 sucked by the compressor is reduced and the gas turbine power is reduced correspondingly.

As described above, the control system 20 includes the function generator 102 serving as first control means and the function generator 106 serving as second control means, which compute the surge margin and the compressor efficiency corresponding to the desired gas turbine power. Further, the control system 20 includes the surge margin determining section 103 and the rotating speed determining section 104 for determining the operation status of the gas turbine based on the surge margin and the rotating speed of the compressor, respectively, so that at least one of the two control means can be instructed to execute control in accordance with the operation status of the gas turbine.

The state of controlling the compressor rotating speed and the opening degree of the variable stator vane of the compressor will now be described with reference to Fig. 2 from the viewpoint of the relationship between the compressor efficiency and the surge margin. When the compressor rotating speed of the gas turbine operating at the full power is reduced for a shift from the rated state (power 1) to a gas turbine power A in Fig. 1, the compressor efficiency increases, whereas the surge margin reduces as compared with the case of the rated state. However, because the compressor rotating speed is held in the predetermined range and the variable stator vane of the compressor is closed (i.e., the opening degree of the variable stator vane of the compressor is reduced) after the gas turbine power has lowered beyond A, the surge margin having once reduced is increased again. On the other hand, the compressor efficiency reduces after the gas turbine power has lowered beyond A, but an amount by which the compressor efficiency reduces from that under the rated state of the compressor efficiency is smaller than the case of performing the control based on only the opening degree of the variable stator vane of the compressor.

In a zone N of Fig. 1, the working airflow in the compressor is held in the predetermined range and the compressor rotating speed is reduced (first step), whereby the compressor efficiency increases and the surge margin reduces. When the gas turbine power is further reduced beyond A (i.e., in a zone M), the compressor rotating speed is held in the predetermined range and the working airflow in the compressor is reduced (second step), whereby the compressor efficiency reduces and the surge margin increases. Although the compressor efficiency reduces in the zone M under the partial load state, a reduction in the compressor efficiency under the partial load state can be suppressed with respect to the compressor efficiency under the rated state because the compressor efficiency is increased in the zone N beforehand. Also, the surge margin reduces in the zone N, but it increases in the zone M. Under the partial load state, the surge margin of the compressor can be ensured at a sufficient level. In other words, a decrease of the surge margin caused by reducing the compressor rotating speed is compensated with a increase of the surge margin caused by reducing the working airflow in the compressor. Thus, since the control process includes the first step of reducing the compressor rotating speed and the second step of reducing the working airflow in the compressor, a reduction in the compressor efficiency can be suppressed and a sufficient surge margin can be ensured.

While, in this embodiment, the second step is executed in the zone M after the start of the first step, both the first step and the second step may be started at the same time in the zone N.

As seen from the above description, by utilizing opposite characteristics of the first control means for controlling the compressor rotating speed and the second control means for controlling the working airflow in the compressor, and employing a plurality of monitoring sections as means for instructing at least one of the two control means to execute the operation based on the surge margin and the compressor rotating speed, it is possible to suppress a reduction in the compressor efficiency and to ensure a sufficient surge margin. Further, stable driving in the partial load operation and an improvement of plant thermal efficiency can be realized at the same time.

In this embodiment, when the gas turbine power is reduced from the full power, the second step of reducing the working airflow in the compressor is started after the start of the first step of reducing the compressor rotating speed. Starting the second step before the first step is not preferable because of a possibility that a state of the compressor efficiency increasing the rated value does not exist in a series of the control steps. Starting the second step after the first step enables the compressor efficiency to be increased from the rated value at least at the gas turbine power A. Then, in a series of the control steps, an amount by which the compressor efficiency reduces from the rated value can be made smaller.

Further, as shown in Fig. 1, when the gas turbine operating at the full power corresponding to the point X is shifted to the partial load state, the compressor rotating speed is reduced until reaching the gas turbine power A while holding the opening degree of the variable stator vane in the predetermined range (zone N in Fig. 1). Note that, in the zone N, the opening degree of the variable stator vane is not required to be held at an exactly constant value. Then, after the gas turbine power has lowered beyond A at which the compressor blade resonates, the working airflow in the compressor is reduced, while the compressor rotating speed is held in the predetermined range (zone M in Fig. 1). Also in the zone M, the compressor rotating speed is not required to be held at an exactly constant value, and a slight increase or decrease is allowed.

The method of controlling the working airflow in the compressor can alternatively be performed by utilizing the bleeding from the compressor 1, or the method of exhausting a part of delivered air from the compressor 1 to the atmosphere. Any of those methods requires a flow adjusting valve to control a flow rate at which air is bled or exhausted. In addition, the thermal efficiency of the gas turbine is reduced because the compressed air having pressure boosted with the motive power generated by the high pressure turbine is discarded through the bleeding or exhaustion. In contrast, by controlling the variable stator vane of the compressor to reduce the working airflow in the compressor as in this embodiment, a reduction in the thermal efficiency of the gas turbine can be suppressed. Therefore, when the working airflow in the compressor is reduced by the method of utilizing the bleeding from the compressor 1, or the method of exhausting a part of the delivered air from the compressor to the atmosphere, the method of controlling the variable stator vane and/or the rotating speed of the compressor, as in the first to third embodiments, is also desirably performed in a combined manner.

While this embodiment represents the case of shifting the gas turbine operating at the full power to the partial load state, the control method according to this embodiment is similarly applicable to the case of changing the mode so as to reduce the gas turbine power operating at a certain load.

### (Second Embodiment)

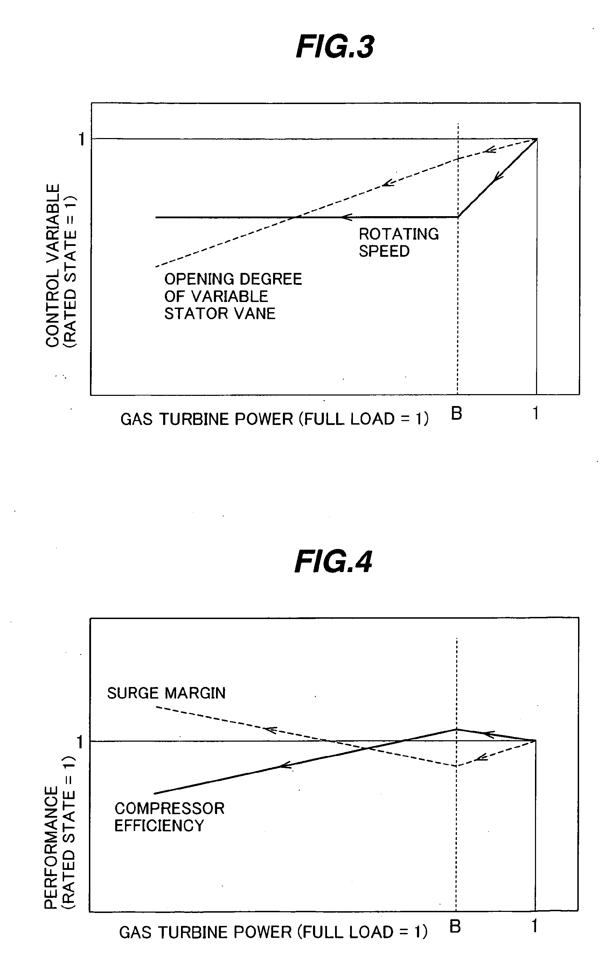

A second embodiment will be described with reference to Figs. 3 and 4. Figs. 3 and 4 are charts similar to Figs. 1 and 2, respectively.

In this second embodiment, when the gas turbine power is reduced from the full power, the second step of reducing the working airflow in the compressor is started at the same time as when the first step of reducing the compressor rotating speed is started. Also in this embodiment, the surge margin reduces as the compressor rotating speed reduces. However, because the working airflow in the compressor is reduced at the same time, an amount by which the surge margin reduces at a gas turbine power B from the value under the full power state.

### (Third Embodiment)

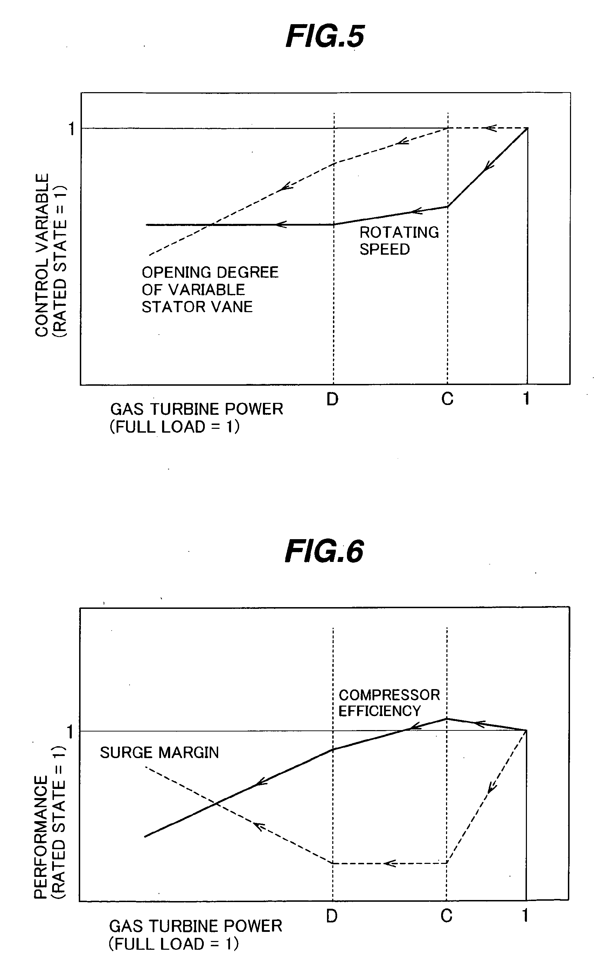

A third embodiment will be described with reference to Figs. 5, 6 and 12. Figs. 5 and 6 are charts similar to Figs. 1 and 2, respectively.

In this third embodiment, when the gas turbine power is reduced from the full power, the compressor rotating speed is first reduced as in the first embodiment. Then, this third embodiment represents a control schedule in which the surge margin of the compressor 1 becomes too low at the time when or before the compressor blade reaches the range of the resonance rotating speed (i.e., the case in which the rotating speed in the region α in Fig. 10 is closer to the rated state than the rotating speed in the region β). Therefore, the control process until the step where the function generator 102 transmits both the surge margin value and the compressor rotating speed to the surge margin determining section 103 in Fig. 12 is the same.

In this embodiment, the surge margin determining section 103 detects whether the compressor rotating speed has reached the minimum rotating speed region α at which a satisfactory surge margin is ensured, or does not yet reach the region α (corresponding to a point C in Figs. 5 and 6). If the surge margin determining section 103 detects an abnormality, the surge margin determining section 103 transmits the working airflow F in the compressor to the function generator 106. The function generator 106 computes the compressor efficiency η from the transmitted working airflow F and then transmits the computed compressor efficiency η to the compressor efficiency determining section 107. Upon receiving the compressor efficiency η transmitted from the function generator 106, the compressor efficiency determining section 107 determines whether the compressor efficiency η is not too low. If the compressor efficiency η is not problematic, the working airflow F in the compressor is transmitted to the subtracter 108. Based on the transmitted working airflow F in the compressor, the subtracter 108 reduces the opening degree of the variable stator vane 30. When the variable stator vane 30 is controlled, the subtracters 108, 111 and the converters 110, 112 operate in the same manners as those in the first embodiment. In that way, the working airflow in the compressor is reduced, to thereby reduce the gas turbine power. As seen from the result computed by the function generator 106, the surge margin value increases. Therefore, the compressor rotating speed can be reduced correspondingly. It is not always required that the compressor rotating speed is reduced at the same time as when the variable stator vane of the compressor is closed. In this embodiment, the compressor rotating speed is reduced at the same time as when the variable stator vane of the compressor is closed, and the variable stator vane is further closed while holding the compressor rotating speed in the predetermined range when the compressor rotating speed has reached or before it reaches the rotating speed range where the compressor blade resonates (i.e., a point D in Figs. 5 and 6). With the control method described above, when the gas turbine power reaches the target power set by the target power setting section 100, the control is stopped at that time.

### (Fourth Embodiment)

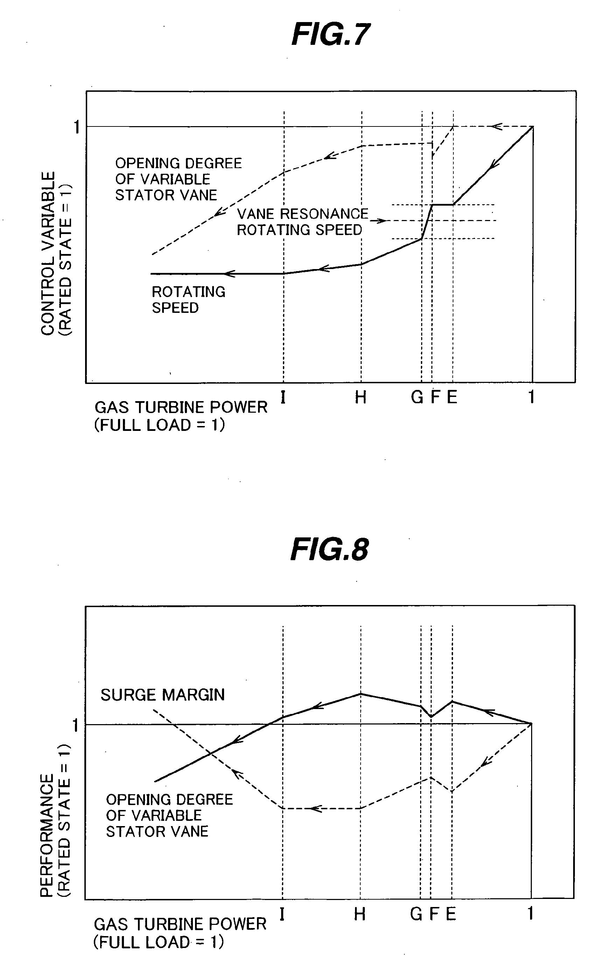

A fourth embodiment will be described with reference to Figs. 7 and 8. Figs. 7 and 8 are charts similar to Figs. 1 and 2, respectively.

In this fourth embodiment, as in the first embodiment, when the gas turbine power is reduced from the full power, the compressor rotating speed is first reduced. Then, when the compressor rotating speed has reached or before it reaches the rotating speed range where the compressor blade resonates (i.e., a point E in Figs. 7 and 8), the gas turbine power is reduced by closing the variable stator vane of the compressor while holding the compressor rotating speed in the predetermined range (as indicated by a point F in Figs. 7 and 8). Thereafter, the compressor rotating speed is reduced in a short time until the compressor rotating speed reaches a lower limit capable of avoiding the rotating speed range where resonance occurs (i.e., a point G in Figs. 7 and 8). Depending on the operation, as shown in Fig. 7, it is desirable to avoid an abrupt drop of the gas turbine power is reduced by opening the variable stator vane (i.e., increasing the opening degree of the variable stator vane) in match with the short-time reduction in the compressor rotating speed. In the case of further reducing the gas turbine power, only the compressor rotating speed is reduced. After reaching a minimum rotating speed at which the surge margin of the compressor can be ensured at a satisfactory level (i.e., a point H in Figs. 7 and 8), the gas turbine power is reduced by closing the variable stator vane of the compressor, as in the third embodiment. Because the surge margin increases with closing of the variable stator vane of the compressor, the compressor rotating speed can be reduced correspondingly.

The control executed in this embodiment enables the compressor rotating speed to be reduced in large amount from the rated state. As seen from Fig. 10, however, when the compressor rotating speed is reduced, the compressor efficiency increases until reaching the point J, but it reduces after that. Therefore, when the compressor rotating speed has reached a level corresponding to a maximum efficiency (i.e., a point I in Figs. 7 and 8), the working airflow in the compressor is reduced while holding the compressor rotating speed in the predetermined range. Because the compressor rotating speed corresponding to the maximum efficiency changes with a decrease of the working airflow in the compressor, it is desirable to perform the operation at the compressor rotating speed at which the maximum efficiency is obtained. In the transition of the compressor rotating speed shown in Fig. 8, the minimum rotating speed at which a satisfactory surge margin can be ensured (i.e., the point I in Figs. 7 and 8) is lower than the rotating speed corresponding to the maximum efficiency (i.e., the point H in Figs. 7 and 8). Depending on the type of the compressor 1, however, the compressor rotating speed may vary such that the rotating speed corresponding to the maximum efficiency is larger than the minimum rotating speed at which a satisfactory surge margin can be ensured. While Figs. 7 and 8 show the control schedule including one resonance rotating speed, the control schedule can also be similarly applied to the case including a plurality of resonance rotating speeds.

In the past, the compressor rotating speed can be reduced just to a maximum value in the rotating speed range where compressor blade resonates (i.e., to the compressor rotating speed at which the compressor blade first resonates when the compressor rotating speed is reduced from the rated state). For that reason, the partial load operation requires design to enlarge the rotating speed range from the compressor rotating speed in the rated state to the resonance rotating speed, and optimum design cannot be obtained from the aerodynamic point of view. In contrast, in this embodiment, the compressor rotating speed can be reduced to a value lower than the resonance rotating speed by reducing the working airflow in the compressor while holding the compressor rotating speed in the predetermined range, when the compressor rotating speed has reached or before it reaches the rotating speed range where resonance occurs. Further, the range from the compressor rotating speed in the rated state to the compressor rotating speed at which the compressor blade resonates is not required to be set large, and hence optimum design can be realized from the aerodynamic point of view.

With the above-described modification of the control schedule, the gas turbine can be operated even at the compressor rotating speed lower than the blade resonance rotating speed, and hence the span from the compressor rotating speed in the rated state to the minimum rotating speed can be increased. Accordingly, the range capable of ensuring the partial load operation with high efficiency is enlarged. Further, since the rotating speed range from the compressor rotating speed in the rated state to the compressor rotating speed at which the compressor blade resonates is not required to be set large, optimum design can be realized from the aerodynamic point of view. In the case of an existing gas turbine, characteristics of the partial load operation can be improved just by modifying an operation control system so as to include the first control means for controlling the compressor rotating speed and the second control means for controlling the working airflow in the compressor, like this embodiment, without changing hardware. As a result, the partial load performance can be improved with no substantial cost.

The embodiments have been described as being applied to the case in which the gas turbine operating at the full power is shifted to the partial load state. However, the control methods in the above-described embodiments are also applicable to the case of shifting the gas turbine operation to reduce the power of a gas turbine operating under any certain load.

The features of the above described embodiments 1-4 may be combined for providing further embodiments of the invention optimized to meet the demands of the respective application. As far as those modifications are readily apparent based on the knowledge and understanding of an expert skilled in the art they shall be disclosed implicitly.

## Claims

1. A method of controlling an operation of a 2-shaft gas turbine comprising a compressor (1) for producing compressed air, a combustor (3) for mixing the compressed air with fuel and burning the air-fuel mixture, a high pressure turbine (2) rotated by a hot gas leaving said combustor (3), and a low pressure turbine (2) rotated by an exhaust gas leaving said high pressure turbine (2),
wherein the method comprises: when, the operation of the 2-shaft gas turbine is changed to reduce a load from a predetermined load,
a first step of reducing a rotating speed of said compressor (1); and
a second step of reducing a working airflow in said compressor (1).

2. A method of controlling an operation of a 2-shaft gas turbine comprising a compressor (1) for producing compressed air, a combustor (3) for mixing the compressed air with fuel and burning the air-fuel mixture, a high pressure turbine (2) rotated by a hot gas leaving said combustor (3), and a low pressure turbine (2) rotated by an exhaust gas leaving said high pressure turbine (2),
wherein the method comprises: when the operation of the 2-shaft gas turbine is changed to reduce a load from a predetermined load,
a first step of reducing a rotating speed of said compressor (1) to a desired rotating speed; and
a second step of reducing a working airflow in said compressor (1),
said second step being started after start of said first step.

3. Method of controlling an operation of a 2-shaft gas turbine according to Claim 1 or 2, **characterized in that**, in said second step of reducing the working airflow, an opening degree of a variable stator vane (30) mounted to said compressor (1) is reduced.

4. Method of controlling an operation of a 2-shaft gas turbine according to Claim 1 or 3, **characterized in that** said second step of reducing the working airflow is started at the same time as start of said first step of reducing the rotating speed of said compressor (1).

5. A 2-shaft gas turbine comprising a compressor (1) for producing compressed air, a combustor (3) for mixing the compressed air with fuel and burning the air-fuel mixture, a high pressure turbine (2) rotated by a hot gas leaving said combustor (3), and a low pressure turbine (2) rotated by an exhaust gas leaving said high pressure turbine (2), said gas turbine comprising;
first control means for controlling a rotating speed of said compressor; and
second control means for controlling a working airflow in said compressor (1).

6. A 2-shaft gas turbine comprising a compressor (1) for producing compressed air, a combustor (3) for mixing the compressed air with fuel and burning the air-fuel mixture, a high pressure turbine (2) rotated by a hot gas leaving said combustor, and a low pressure turbine (4) rotated by an exhaust gas leaving said high pressure turbine (2), said gas turbine comprising;
first control means (102) for controlling a rotating speed of said compressor (1);
second control means (106) for controlling a working airflow in said compressor (1); and
means for instructing at least one of said first control means (102) and said second control means (106) to work, based on a surge margin computed using a pressure ratio in said compressor (1) or the compressor rotating speed.

7. 2-shaft gas turbine according to Claim 5 or 6, **characterized in that**, in said second control means (106) for controlling the working airflow in said compressor (1), an opening degree of a variable stator vane (30) mounted to said compressor (1) is reduced.

8. 2-shaft gas turbine according to Claim 6 or 7, **characterized in that** said means for instructing at least one of said first control means (102) and said second control means (106) to work instructs said first control means (102) and said second control means (106) to work at the same time.

9. A method of controlling an operation of a 2-shaft gas turbine comprising a compressor (1) for producing compressed air, a combustor (3) for mixing the compressed air with fuel and burning an air-fuel mixture, a high pressure turbine (2) rotated by a hot gas leaving said combustor, and a low pressure turbine (4) rotated by an exhaust gas leaving said high pressure turbine (2),
wherein, when the operation of the 2-shaft gas turbine is changed to reduce a load from a predetermined load, a decrease of a surge margin caused by reducing a rotating speed of said compressor (1) is compensated with an increase of the surge margin caused by reducing a working airflow in said compressor (1).

10. A system for controlling an operation of a 2-shaft gas turbine comprising a compressor (1) for producing compressed air, a combustor (3) for mixing the compressed air with fuel and burning the air-fuel mixture, a high pressure turbine (2) rotated by a hot gas leaving said combustor (3), and a low pressure turbine (4) rotated by an exhaust gas leaving said high pressure turbine (2), said system comprising;
first control means (102) for controlling a rotating speed of said compressor (1); and
second control means (106) for controlling a working airflow in said compressor (1).

11. A 2-shaft gas turbine comprising a compressor for producing compressed air, a combustor (3) for mixing the compressed air with fuel and burning the air-fuel mixture, a high pressure turbine (2) rotated by a hot gas leaving said combustor (3), and a low pressure turbine (4) rotated by an exhaust gas leaving said high pressure turbine (2), said gas turbine comprising;
a variable stator vane (30) disposed at an air inlet of said compressor (1);
first control means (103) for controlling a rotating speed of said compressor (1); and
second control means (106) for controlling said variable stator vane (30) of the compressor (1).

12. A method of controlling an operation of a 2-shaft gas turbine comprising a compressor (1) for producing compressed air, a combustor (3) for mixing the compressed air with fuel and burning an air-fuel mixture, a high pressure turbine (2) rotated by a hot gas leaving said combustor (3), and a low pressure turbine (4) rotated by an exhaust gas leaving said high pressure turbine (2),
wherein the method comprises: when the operation of the 2-shaft gas turbine is changed to reduce a load from a predetermined load,
a first step of reducing a rotating speed of said compressor (1); and
a second step of reducing a working airflow in said compressor (1),
at least one of said first step and said second step being executed to obtain a preset target power of said 2-shaft gas turbine.
